# EUROPEAN PATENT SPECIFICATION

(11) **EP 0 400 949 B1**
(45) Date of publication and mention of the grant of the patent: **19.07.1995**
(21) Application number: 90305796.6
(22) Date of filing: 29.05.1990
(51) Int. Cl.: G11B 17/04

(54) **Disc loading apparatus**
Plattenladegerät
Appareil de chargement de disque

(30) Priority: 01.06.1989 JP 139782/89
(43) Date of publication of application: 05.12.1990
(73) Proprietor: SONY CORPORATION, Tokyo (JP)
(72) Inventor: Urushibata, Hiroyuki, c/o Sony Corporation, Shinagawa-ku, Tokyo (JP); Okushita, Kazuya, c/o Sony Corporation, Shinagawa-ku, Tokyo (JP)
(74) Representative: Ayers, Martyn Lewis Stanley

(56) References cited:
- EP-A- 0 164 788
- EP-A- 0 185 140
- EP-A- 0 216 442
- EP-A- 0 261 384
- DE-A- 3 601 831
- GB-A- 2 152 267

## Description

The present invention relates generally to optical disc players and, more particularly, is directed to a disc loading apparatus for use in an optical disc player and in which the skew of an optical disc will be detected and an optical pickup head controlled by a tilt adjusting mechanism on the basis of the detected output so that an optical axis of the optical pickup head becomes perpendicular to the record surface of the optical disc.

Japanese Utility Model Laid-Open Gazette No. 63-55240 describes a disc loading and chucking mechanism which is applied to most of the existing optical disc players. According to this previously-proposed disc loading and chucking mechanism, a disc tray on which an optical disc is held is horizontally withdrawn to the disc reproducing position and then, a movable chassis on which a disc table is supported is elevated, whereby the optical disc is chucked to the disc table.

Incidentally, various kinds of optical discs are now available on the market, for example, optical video disc (i.e., optical video disc (VD)), VD single (optical video disc of small diameter), compact disc (CD), CD single (compact disc of small diameter) and the like. The optical video disc (VD), in particular, is large in diameter and weighs much so that, when this optical video disc is chucked on the disc table, the outer peripheral portion thereof is unavoidably skewed downward by a very small amount due to its own weight. To solve this problem, it has been proposed that the optical disc player is provided with a so-called tilt adjusting mechanism by which an optical axis of an optical pickup head is properly inclined in accordance with the skewed amount of the optical disc so that the optical axis of the optical pickup head becomes perpendicular to a record surface of the optical disc (see Japanese Patent Laid-Open Gazette No. 63-261542).

In the prior-art optical disc player having the optical pickup head tilt adjusting mechanism, the disc loading and the disc chucking are performed by driving one motor, and the tilt adjustment of the optical pickup head is performed by driving another motor.

Further, in the chucking mechanism of the prior-art optical disc player, a movable chassis on which the disc table is supported on a fixed or stationary chassis so that it can rotate with an inclination, thereby to move the disc table in the upper and/or lower direction.

The above-described optical disc player according to the prior art includes not only the motor for effecting the disc loading and disc chucking but also the motor for effecting the tilt adjustment of the optical pickup head. In other words, this optical disc player is of a two-motor drive system and therefore it is expensive.

Furthermore, in the prior-art chucking mechanism of the optical disc player, since the movable chassis is supported on the stationary chassis so that it can rotate with an inclination, the supporting point of the movable chassis must be placed at a position very distant from the chucking portion, which makes the whole of the mechanism large in size. For this reason, it is very difficult to keep a space large enough to provide therein other mechanism parts and circuit boards.

EP-A1-261384 discloses one of our earlier proposals for a disc loading arrangement on which the pre-characterizing portion of claim 1 is based and in which a single motor is used for the loading, chucking and pickup-control. This is done via a mechanism which includes a rotable gear wheel provided with teeth for operating the extension and retraction of the disc tray and two cam grooves one for the chucking mechanism and one for the skew control.

EP-A3-185140 and US-A-4701901 disclose disc loading mechanisms in which the extension/retraction mechanism for the disc tray and the chucking mechanism are linked for single drive. In US-A-4701901 the drive is also used to track the pick-up across the disc.

It is an object of the present invention to provide an improved optical disc player.

According to the present invention, there is provided an optical disc player comprising:
disc carrying means movable between an extended, disc loading position, outside the player body and a retracted position in the player body, drive means for moving the disc carrying means between the two positions, elevating means for moving a loaded disc to a playing position and a pickup supporting portion carrying an optical pickup head, wherein:
the drive means are provided with a rotation operation member having a drive cam groove and for moving the disc carrying means between said extended position and said retracted position;
the elevating means are engaged with said cam groove of the rotation operation member for moving a player portion in the up and down direction relative to the plane of a loaded disc;
the pickup supporting portion is supported on said player portion so as to be skewable relative to the surface of a loaded disc, characterised by:
a cam member rotatable by said rotation operation member and which has on its periphery a skew cam groove engagable with said pickup supporting portion, and having an opening portion which opposes an engaging member provided in said player portion when said player portion is moved upwardly, the cam member being operable to skew said pickup supporting portion by engagement thereof with said skew cam groove.

Thus, with the present invention an optical disc player can be simplified in arrangement and made less expensive with incorporated mechanisms made compact in size to provide an excellent space factor. Further freedom in designing circuit boards and an outer casing can be increased.

The present invention can be applied to optical disc players of various kinds and to players which can take several different types of optical discs.

The invention will be further described by way of non-limitative example, with reference to the accompanying drawings, in which:-
Figure 1 is a plan view illustrating an embodiment of an optical disc player according to the present invention;
Figure 2 is a plan view of the optical disc player shown in Figure 1, and in which a disc tray is removed so as to facilitate the understanding of the construction thereof;
Figs. 3A and 3B are side views of the optical disc player shown in Fig. 1 with a part being removed, respectively;
Figs. 4A to 4C are side views of a tilt adjusting mechanism of the optical disc player shown in Fig. 1, and to which reference will be made in explaining an operation of the tilt adjusting mechanism, respectively;
Fig. 5 is a plan view of a main portion (i.e., operation mechanism portion) of the tilt adjusting mechanism of the invention, and illustrating the same in an enlarged scale;
Fig. 6 is an expanded view of a cam member for implementing a tilt operation, and illustrating the same in an enlarged fashion; and
Figs. 7 to 9 are plan views of the optical disc player shown in Fig. 1, and to which reference will be made in explaining an operation of the optical disc player.

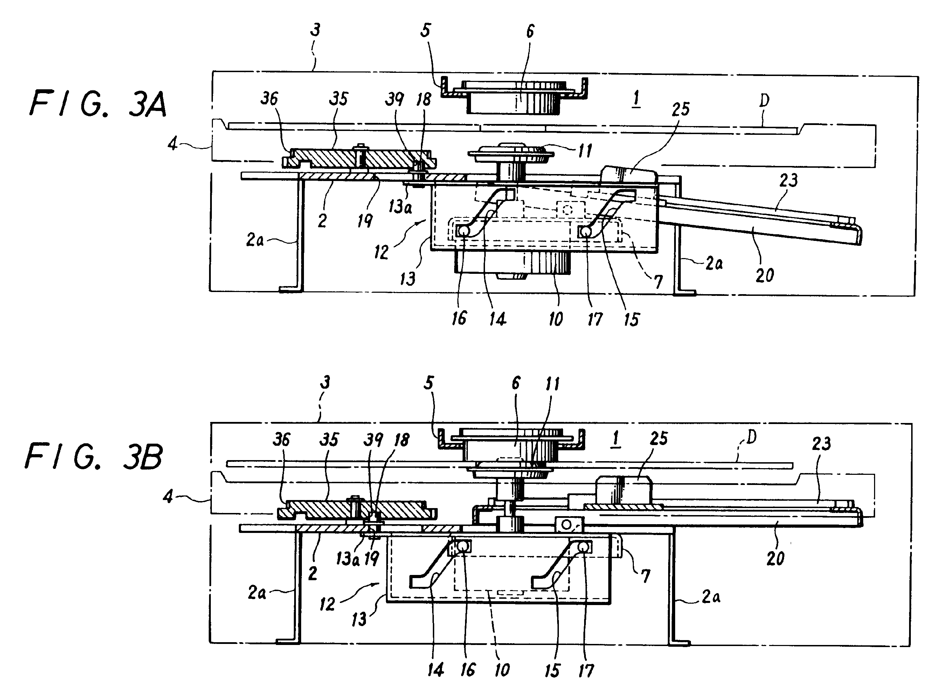

In the figures, reference numeral 1 generally designates a drive mechanism of an optical disc player of the present invention. Reference numeral 2 generally designates a fixed or stationary chassis provided as a first chassis to which drive mechanism portions and parts are supported. As shown in Figs. 3A and 3B, the stationary chassis 2 is secured to an outer casing 3 via leg portions 2a thereof.

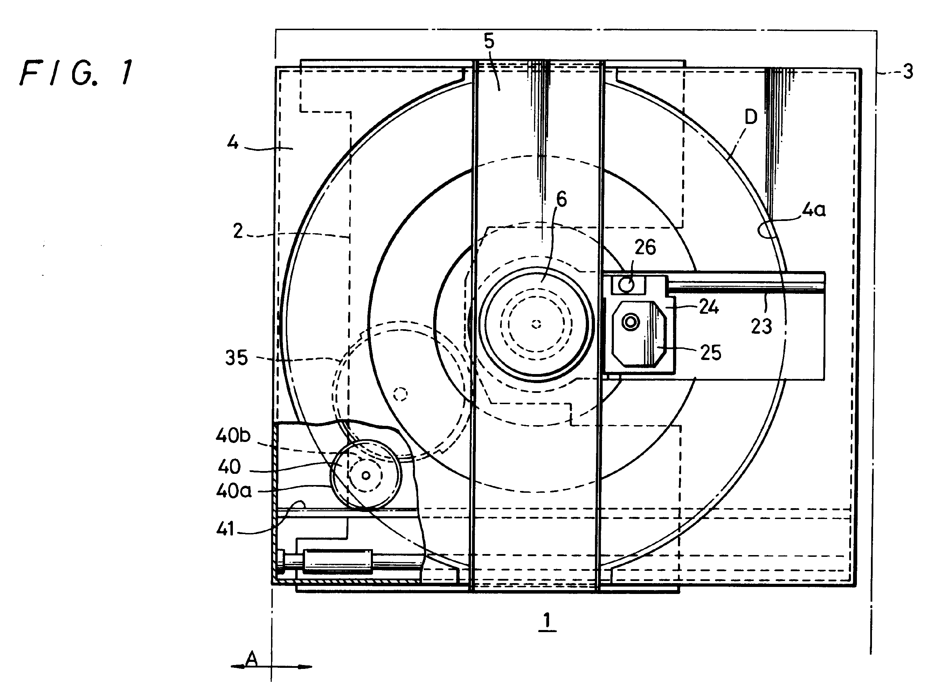

The stationary chassis 2 supports on an upper surface side thereof a disc tray 4 for holding thereon an optical disc D such that the disc tray 4 may freely move back and forth (i.e., in the direction shown by an arrow A in Fig. 1) between the disc loading position and the disc reproducing position. In Fig. 1, the left-handed side portion represents the front direction and the right-handed side portion represents the rear direction. The disc tray 4 forms on an upper surface thereof a concave portion 4a on which the optical disc D is loaded. The concave portion 4a of the disc tray 4 is formed of a plurality of circular, concentric concave portions whose diameters become smaller as they reach the center so that it can hold thereon various kinds of discs, such as, optical video disc (VD), VD single (optical video disc of small diameter), compact disc (CD), CD single (compact disc of small diameter) and the like.

Above the stationary chassis 2 and between its left and right side end portions there is stretched a supporting plate 5 to bridge the disc tray 4. The supporting plate 5 is provided at a central portion thereof with a rotatable chucking member 6 which is opposed to and magnetically attracted by a disc table that will be described later.

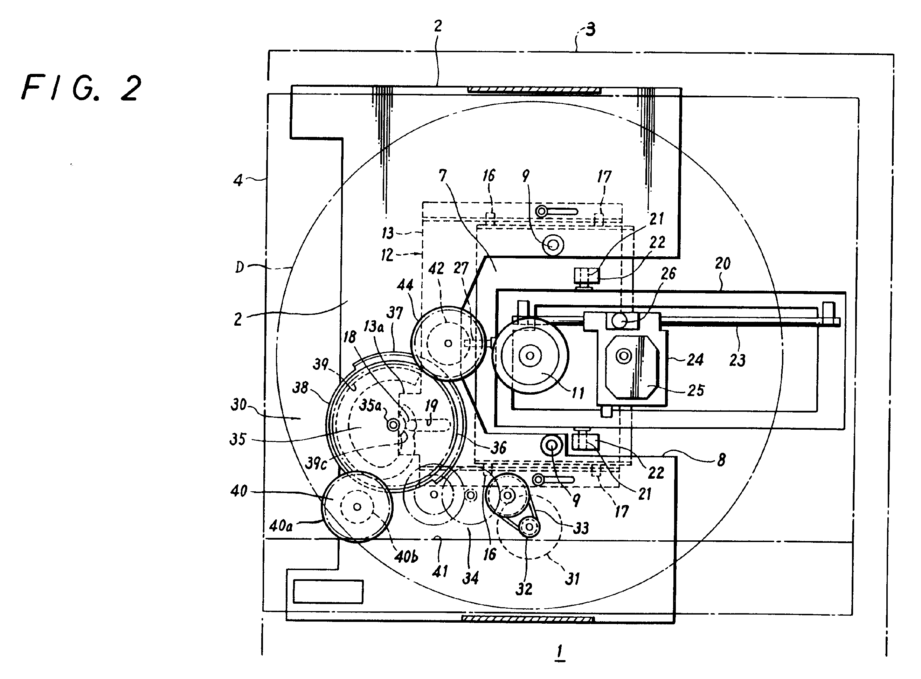

As shown in Fig. 2, the stationary chassis 2 supports on a lower surface thereof a movable chassis 7 as a second chassis so that the movable chassis 7 may move up and down in the vertical direction. The movable chassis 7 is located so as to cross a concave portion 8 which is formed as a recess portion extending from the rear end edge portion to the central portion of the stationary chassis 2. Also, the movable chassis 7 is supported to the stationary chassis 2 so as to move up and down along a pair of vertical guide shafts 9 vertically projected from the stationary chassis 2. As shown in Figs. 3A and 3B, a spindle motor 10 is secured to the movable chassis 7 as a disc rotating device, and a disc table 11 is attached to the top of a drive shaft of the spindle motor 10.

As shown in Figs. 3A and 3B, the stationary chassis 2 supports on a lower surface side thereof an elevating mechanism 12 which moves the movable chassis 7 up and down in the vertical direction. The elevating mechanism 12 is formed of a sliding member 13 which is supported to the lower surface side of the stationary chassis 2 so as to slide back and forth along the lower surface of the stationary chassis 2. An overall configuration of the slide member 13 is substantialy a housing-shape whose two side surface portions have formed therethrough two elongated openings 14 and 15. As shown in Figs. 3A and 3B, the elongated openings 14 and 15 are so shaped as to be extended higher from the front direction to the rear direction with a large inclination, and respective end portions of the openings 14 and 15 are formed horizontally. The elongated openings 14 and 15 are in engagement with supporting pins 16 and 17 which are projected from the two side portions of the movable chassis 7.

A projected plate portion 13a is formed at the front end portion of the slide member 13 so as to extend under the lower surface side of the stationary chassis 2. A pin 18 implanted on the projected plate portion 13a is projected to the upper surface side of the stationary chassis 2 through an ellipse opening 19 formed through the stationary chassis 2, and is then in engagement with a cam groove of a rotating member which will be described later.

As shown in Figs. 2, 3A and 3B, a pickup supporting frame 20 for holding thereon an optical pickup head 25 is supported on the movable chassis 7 which is moved up and down by the elevating mechanism 12. The pickup supporting frame 20 is pivotally supported at supporting shafts 21 projected from the two side portions thereof to bearing portions 22 provided at the movable chassis 7, and which thereby skews relative to the record surface of the optical disc D.

A guide rail 23 is secured to the pickup supporting frame 20 along the radial direction of the disc D, and a sliding member 24 is supported by the guide rail 23 so as to slide along the guide rail 23. The optical pickup head 25 is secured to the sliding member 24 in an opposing relation to the record surface of the optical disc D. While the sliding member 24 with the optical pickup head 25 secured thereto is moved by a pre-determined drive mechanism, such drive mechanism is not shown in this embodiment.

Further, a detecting device 26 is provided on the sliding member 24 in the vicinity of the optical pickup head 25 as a tilt sensor for detecting a skewed condition of the optical disc D. For example, in this detecting device 26, a light source such as a light emitting diode (LED) or the like emits a light beam toward the optical disc D, and a reflected-back light from the optical disc D is received by two-divided photo-detectors such as photo-diodes, whereby the amount in which the optical axis of the optical pickup head 25 is tilted relative to the optical disc D, i.e., the skewed amount of the optical disc D is detected on the basis of a differential output signal from the two-divided photo-diodes.

An engagement lever 27 is projected from the front end face portion of the pickup supporting frame 20. When this engagement lever 27 is engaged with a cam member, which will be described later, the tilt adjustment of the optical pickup head 25 is performed. The pickup supporting frame 20 is rotated and biased by a pre-determined biasing device such that, in the normal condition, the front end portion thereof, i.e., the end portion thereof from which the engagement lever 27 is projected is biased upwards.

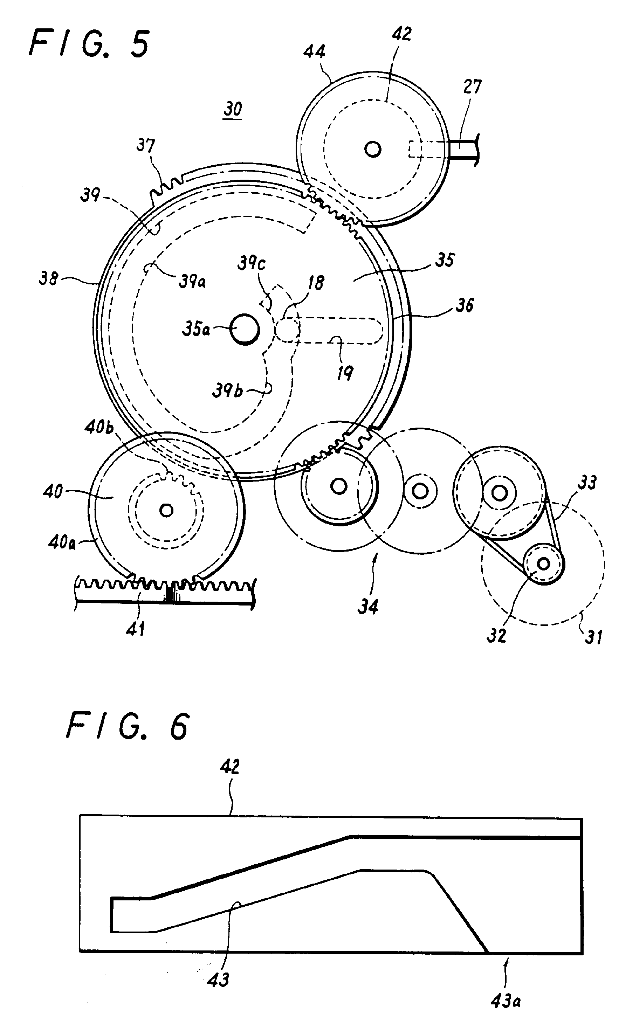

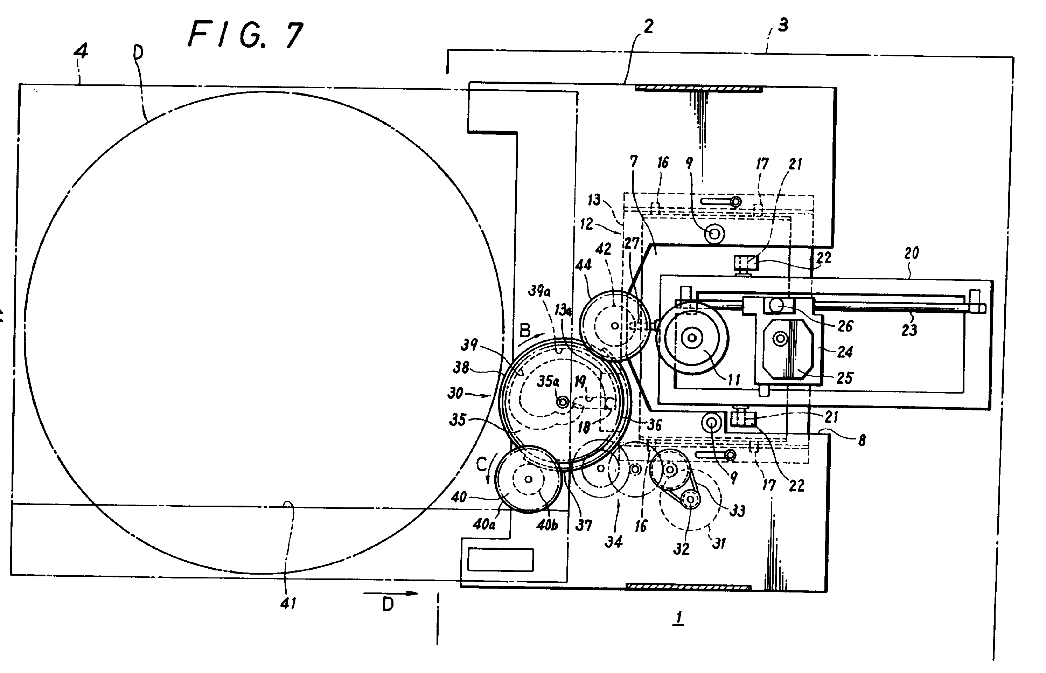

Referring to Fig. 5, let us describe an operation mechanism 30 which moves the disc tray 4, moves the movable chassis 7 in the upper and lower direction and which skews the pickup supporting frame 20. Members of the operating mechanism 30 are respectively provided on the upper surface side of the stationary chassis 2 except the motor.

As shown in Fig. 5, a motor 31 is secured to the lower surface of the stationary chassis 2 at a pre-determined position thereof as a driving source. A drive shaft of the motor 31 is projected through the upper surface of the stationary chassis 2, and a pulley 32 is attached to the top of the drive shaft of the motor 31.

A revolution of the pulley 32 by the motor 31 is transmitted through a drive belt 33 to reduction gear train 34 which is provided as transmission mechanisms. The reduced revolution of the reduction gear train 34 causes a rotating operation member 35, pivotally provided at the front end portion of the stationary chassis 2, to rotate. In other words, as shown in Fig. 5, an operation gear portion 36 is formed on the whole periphery of the upper surface of the rotating operation member 35, and a final stage gear of the reduction gear train 34 meshes with the operation gear portion 36.

A gear portion 37 is formed around the outer peripheral portion of the rotating operation member 35 over a predetermined range to drive the disc tray 4 (see Fig. 1). More precisely, in this embodiment, the gear portion 37 is formed around substantially the semicircular portion of the rotating operation member 35 and the remaining semicircular portion is formed as a geneva stop portion 38.

A cam groove 39 is formed on the lower surface portion of the rotating operation member 35 and, this cam groove 39 is in engagement with the pin 18 of the above-noted elevating mechanism 12. This cam groove 39 is composed of a loading area 39a, a chucking area 39b and a tilt area 39c. The loading area 39a is used to implement the loading of the optical disc D, the chucking area 39b is used to chuck the optical disc D to the disc tray 4 and the tilt area 39c is used to adjust the tilt of the optical pickup head 25. The loading area 39a is formed as an arcuate shape so that it extends about the rotation central shaft 35a of the rotation operation member 35 along its outer peripheral portion. The chucking area 39b forms an arc which very suddenly approaches the rotation central shaft 35a of the rotation operation member 35 from the end portion of the loading area 39a. Further, the tilt area 39c forms an arc about the rotation central shaft 35a of the rotation operation member 35 in the vicinity thereof.

An idle gear 40 is pivotally supported to the stationary chassis 2 in association with the disc tray drive gear portion 37 of the rotation operation member 35. The idle gear 40 is integrally composed of a large-diameter gear portion 40a provided at the upper portion thereof and a small-gear portion 40b provided at the lower portion thereof. During the disc loading period, the disc tray drive gear portion 37 of the rotation operation member 35 meshes with the small-gear portion 40b, whereas the large-gear portion 40a incessantly meshes with a rack gear portion 41 formed on the lower surface side of the disc tray 4 in the same direction as the direction in which the disc tray 4 moves, i.e., in the front and rear direction.

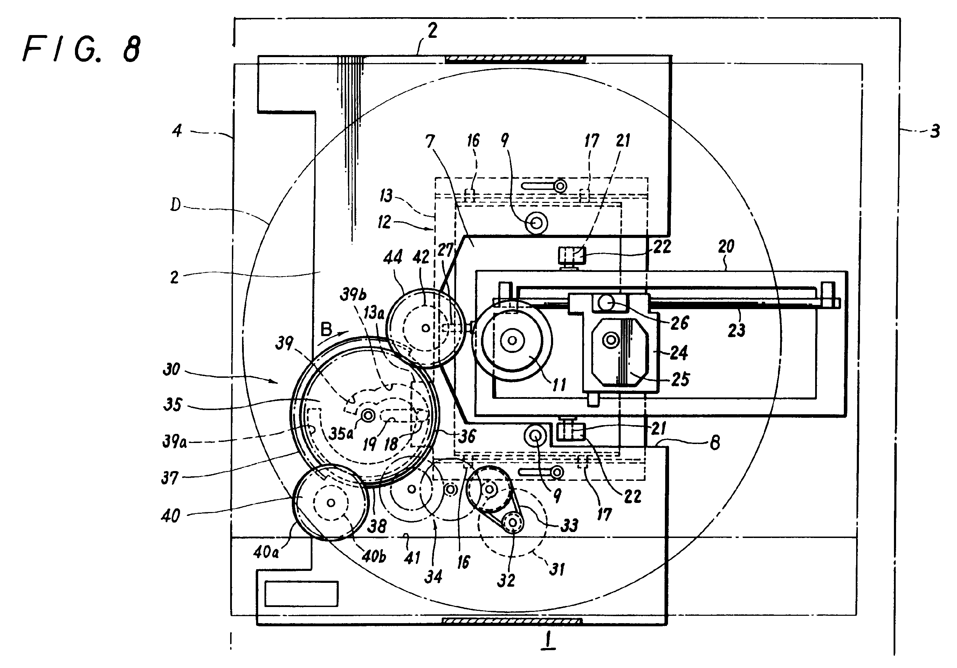

Further, a tilt operating cam member (hereinafter simply referred to as a cam member) 42 is pivotally provided on the stationary chassis 2 at the position corresponding to the engagement lever 27 of the pickup supporting frame 20. A cam groove 43 is formed on the peripheral surface of the cam member 42. More specifically, as shown in Fig. 6, this cam groove 43 has a shape whose height successively changes and has formed at one end portion thereof an opening portion 43a which opens widely in the downward direction. The engagement lever 27 of the pickup supporting frame 20 engages with the cam groove 43, adjusting the tilt angle of the optical pickup head 25.

A gear portion 44 is formed unitarily with the upper portion of the cam portion 42, and this gear portion 44 meshes with the operation gear portion 36 of the rotation operation member 35. In other words, the cam member 42 is rotated by the motor 31 via the rotation operation member 35.

An operation of the optical disc player thus constructed according to this embodiment will be described next.

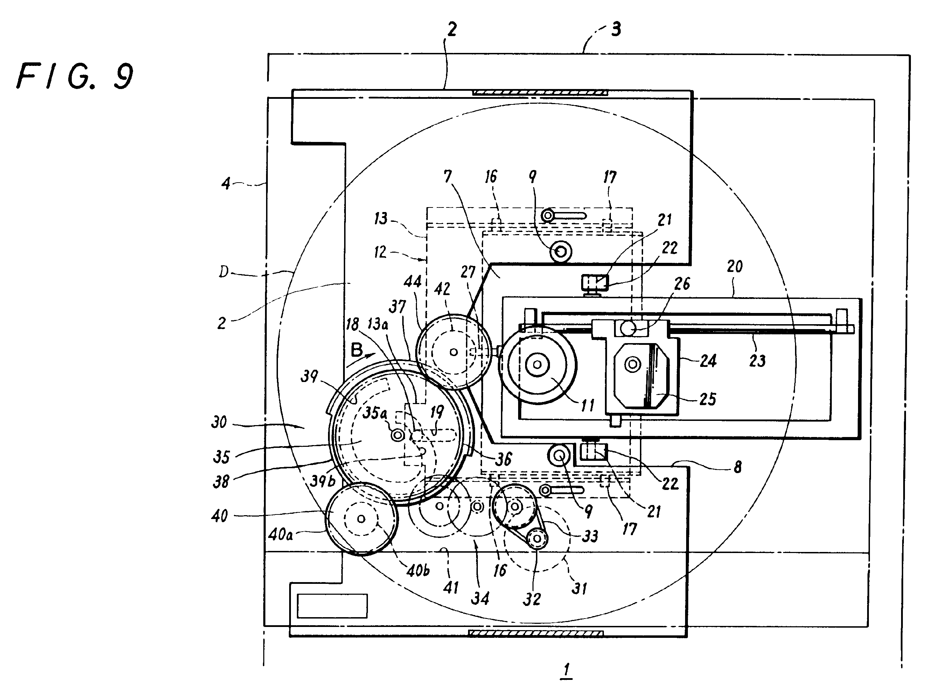

When the disc tray 4 is fully withdrawn to the foremost moving position, i.e., the disc loading position, as shown in Fig. 7, the disc tray drive gear portion 37 of the rotation operation member 35 and the small-gear portion 40b of the idle gear 40 are meshed with each other, accordingly, the rotation operation member 35 and the disc tray 4 are meshed with each other via the idle gear 40 so that they are coupled together from a power standpoint.

Under this condition, the operation pin 18 of the elevating mechanism 12 is engaged with the starting portion of the loading area 39a of the cam groove 39 of the rotation operation member 35, causing the sliding member 13 to be located at the rear position. Therefore, as shown in Fig. 3A, the supporting pins 16 and 17 of the movable chassis 7 are engaged with the front edge lower portions of the operation rectangular openings 14 and 15 of the slide member 13, placing the movable chassis 7 at the lower position.

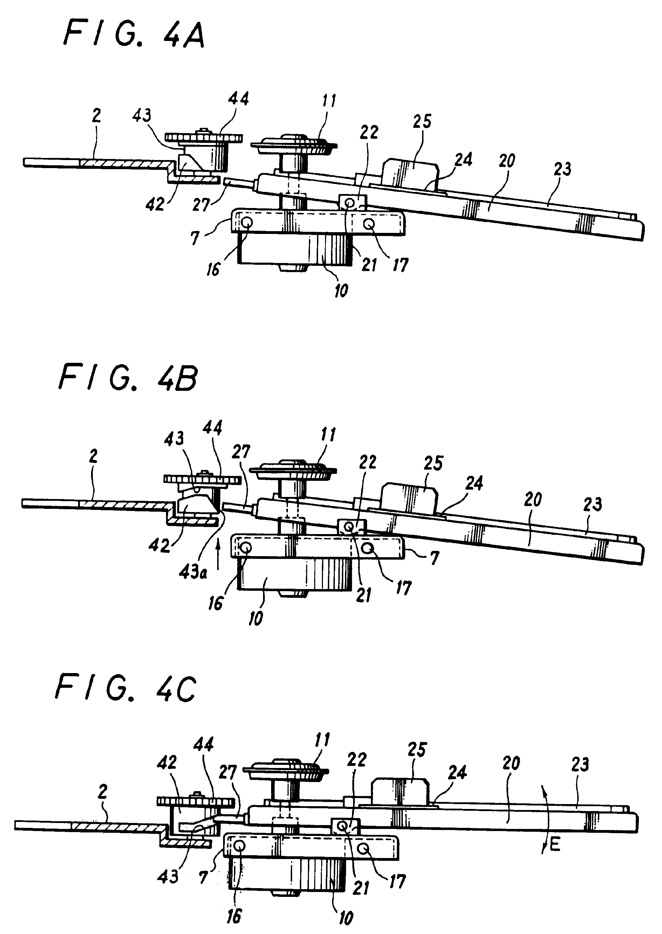

Under the condition that the movable chassis 7 is placed at the lower position, as shown in Fig. 4A, the engagement lever 27 of the pickup supporting frame 20 supported on the movable chassis 7 are made distant from the cam member 42 in the vertical direction, in other words, the cam member 42 and the engagement lever 27 are not in engagement with each other, whereby the rotation operation member 35 and the pickup supporting frame member 20 are distant from each other from a power standpoint.

From the above-described state, when the motor 31 is rotated in one direction, for example, in the positive direction, the rotation operation member 35 rotates in the clockwise direction (i.e., the direction shown by an arrow B in Fig. 7), whereby the idle gear 40 rotates in the counterclockwise direction (i.e., the direction shown by an arrow C in Fig. 7), transmitting the rotation of the rotation operation member 35 through the idle gear 40 to the disc tray 4. As a result, the disc tray 4 moves rearwards (i.e., the direction shown by an arrow D in Fig. 7), carrying the disc D to the disc reproducting position (i.e., the position shown in Fig. 8). Therefore, the disc loading operation is carried out.

When the disc tray 4 is fully withdrawn and the disc loading operation is ended, as shown in Fig. 8, the disc tray drive gear portion 37 of the rotation operation member 35 is released from the small-gear portion 40b of the idle gear 40 andthe geneva stop portion 38 is opposed to the small-gear portion40b, resulting in the rotation operation member 35 and the disc tray 4 being separated from each other from a power standpoint.

In this fully-withdrawn state of the disc tray 4, the disc tray 4 is locked by a pre-determined locking device (not shown) so that it is inhibited from moving.

In the above-described loading operation, in accordance with the rotation of the rotation operation member 35, the operation pin 18 of the elevating mechanism 12 relatively moves within the loading area 39a of the cam groove 39. In that case, however, the loading area 39a of the cam groove 39 is formed as the arc about the rotation central shaft 35a of the rotation operation member 35 as described hereinbefore, so that the position of the operation pin 18 in the front to rear direction is not changed. Consequently, the sliding member 13 of the elevating mechanism 12 is not operated, keeping the movable chassis 7 at the same lower position.

After the above-described loading operation is completed, the motor 31 is continuously driven, causing the rotation operation member 35 to rotate in the clockwise direction (i.e., the direction shown by an arrow B in Fig. 8). When the position in which the operation pin 18 is in engagement with the cam groove 39 is moved from the loading area 39a to the chucking area 39b, the operation pin 18 is guided along the groove-shape of the chucking area 39b and moved forward (see Fig. 9). Consequently, the slide member 13 moves forward, urging the engagement positions of the supporting pins 16 and 17 of the movable chassis 7 relative to the operation rectangular openings 14 and 15 to move from the lower position to the high position as shown in Fig. 3B. In other words, the movable chassis 7 is supported by the guide shafts 9 so that it can move only in the vertical direction and it is inhibited from moving in the front and rear direction. Thus, when the slide member 13 moves forward, the inclined edges of the operation rectangular openings 14 and 15 push the supporting pins 16 and 17 of the movable chassis 7 in the upward direction, causing the movable chassis 7 to be lifted in the vertical direction. When the movable chassis 7 is lifted as described above, the disc table 11 lifts the optical disc D on the disc tray 4 and urges the optical disc D against the chucking member 6 thereby to perform the chucking operation in which the disc D can be reproduced.

During the period in which the movable chassis 7 is moved in the upper direction as described above, as shown in Fig. 4B, the engagement lever 27 of the pickup supporting frame 20 supported on the movable chassis 7 enters the cam groove 43 of the cam member 42 from the underside of the opening portion 43a so as to engage with the cam groove 43. In this operation, the rotation of the cam member 42 and the movement of the movable chassis 7 are synchronized with each other so that, when the movable chassis 7 is moved upward, the engagement lever 27 properly opposes the opening portion 43a of the cam groove 43.

Under the condition that the pickup supporting frame 20 rotates about the supporting shaft 21 in accordance with the ascension of the movable chassis 7 and the movable chassis 7 is fully moved upward resulting in the disc chucking operation being finished, as shown in Fig. 4C, the engagement lever 27 of the pickup supporting frame 20 is completely engaged with the cam groove 43 of the cam member 42. If the skew of the disc D is detected by the skew detecting device 26 during the reproduction of the disc D, the motor 31 is rotated in the clockwise direction or in the counterclockwise direction on the basis of the detected signal from the skew detecting device 26, whereby the cam member 42 is rotated through the rotation operation member 35. Thus, the pickup supporting frame 20 is guided by the cam groove 43 and is skewed about the support shaft 21 in the direction shown by an arrow E in Fig. 4C. Consequently, the optical axis of the optical pickup head 25 provided on the pickup supporting frame 20 is inclined with a proper inclination angle corresponding to the skew of the disc D. In other words, the tilt angle of the optical pickup head 25 is adjusted so that the optical axis of the optical pickup head 25 is placed at a right angle relative to the recording surface of the disc D. More precisely, the optical axis of the optical pickup head 25 is placed in the direction vertical to the signal recording surface of the disc D.

In the aforenoted operation in which the tilt angle of the optical pickup head 25 is adjusted, the rotation operation member 35 is rotated within the range in which the operation pin 18 of the elevating mechanism 12 is in engagement with the tilt area 39c of the cam groove 39 as shown in Fig. 2. Further, the tilt area 39c is formed as the arc extended about the rotation central shaft 35a of the rotation operation member 35 as described hereinbefore. As a result, the positions of the operation pin 18 in the front to rear direction is not changed at all so that the elevating mechanism 12 is made inoperative, maintaining the movable chassis 7 at the elevated position, i.e., maintaining the disc chucking condition.

In the optical disc player of this embodiment, since the single motor 31 can perform all operations such as the movement of the disc tray 4 (disc loading), the ascension of the movable chassis 7 (chucking) and the skew of the pickup supporting frame 20 (tilt adjustment of the optical pickup head), the arrangement of the optical disc player of the invention can be simplified as compared with the prior-art optical disc player in which the tilt adjustment of the optical pickup head is performed by another motor for exclusive use, which provides a decreased manufacturing cost and an inexpensive optical disc player.

Further, in the optical disc player of this embodiment, since the chucking mechanism portion is arranged such that the movable chassis 7 with the spindle motor 10 is moved up and/or down in the vertical direction relative to the stationary chassis 2, the optical disc player of this invention can be made compact in mechanism as compared with the prior-art optical disc player in which the movable chassis 7 is rotated with an inclination relative to the stationary chassis 2. Therefore, as is clear from the figures of the invention, a wide spacing can be provided within the outer housing 3, whereby the portion in which the circuit board or the like is incorporated can be increased in size sufficiently. This leads to the increase of freedom in designing the circuit board and the outer housing.

Having described a preferred embodiment of the invention with reference to the accompanying drawings, it is to be understood that the invention is not limited to that precise embodiment and that various changes and modifications could be effected by one skilled in the art without departing from the scope of the invention as defined in the appended claims.

## Claims

1. An optical disc player comprising:
disc carrying means (4) movable between an extended, disc loading position, outside the player body and a retracted position in the player body, drive means (31 to 34) for moving the disc carrying means (4) between the two positions, elevating means (12 to 18) for moving a loaded disc to a playing position and a pickup supporting portion (20) carrying an optical pickup head (24,25), wherein:
the drive means (31 to 41) are provided with a rotation operation member (35) having a drive cam groove (39) and for moving the disc carrying means (4) between said extended position and said retracted position;
the elevating means (12 to 18) are engaged with said cam groove (39) of the rotation operation member (35) for moving a player portion (13) in the up and down direction relative to the plane of a loaded disc;
the pickup supporting portion (20) is supported on said player portion (13) so as to be skewable relative to the surface of a loaded disc, characterised by:
a cam member (42) rotatable by said rotation operation member (35) and which has on its periphery a skew cam groove (43) engagable with said pickup supporting portion (20), and having an opening portion (43a) which opposes an engaging member (27) provided in said player portion (13) when said player portion (13) is moved upwardly, the cam member being operable to skew said pickup supporting portion by engagement thereof with said skew cam groove (43).

2. An optical disc player according to claim 1, further comprising a tilt sensor (26) provided on said optical pickup head (24, 25), and wherein said cam member (42) is rotated on the basis of a detected output from said tilt sensor (26) so that said optical pickup supporting portion (20) can be skewed.

3. An optical disc player according to claim 1 or 2, wherein said drive cam groove (39) of the rotation operation member (35) is comprised of a loading area (39a) corresponding to the movement of said carrying means (4), a chucking area (39b) continuous to said loading area (39a) for moving said elevating means (12 to 18) in the up and down direction and a tilt area (39c) communicated with said chucking area (39b) said cam member (42) being rotatable to skew said optical pickup supporting portion (20) when the elevating means (12 to 18) is engaged with the tilt portion (39c) of the drive cam groove (39).

4. An optical disc player according to claim 1, 2 or 3, wherein said carrying means (4) includes a disc tray (4) having a concave portion (4a) on which an optical disc can be loaded and said rotation operation member (35) is provided with a gear portion (37) to drive a rack (41) of said disc tray (4) to move said disc tray (4).

## Patentansprüche

1. Optischer Plattenspieler, der umfaßt:
ein Plattentragemittel (4), das zwischen einer ausgefahrenen Position, nämlich der Platteneinlegeposition, die sich außerhalb des Spielerkörpers befindet, und einer eingefahrenen Position innerhalb des Spielerkörpers bewegbar ist, Antriebsmittel (31 bis 34) zum Bewegen des Plattentragemittels (4) zwischen den zwei Positionen, Hebemittel (12 bis 18) zum Bewegen einer eingelegten Platte zu einer Abspielposition und einen Abtastertrageteil (20) zum Tragen eines optischen Abtastkopfs (24, 25), wobei
die Antriebsmittel (31 bis 41) mit einem Drehbetätigungsteil (35) versehen sind, das eine Antriebsnockennut (39) hat und zum Bewegen des Plattentragemittels (4) zwischen der ausgefahrenen Position und der eingefahrenen Position vorgesehen ist,
die Hebemittel (12 bis 18) mit der Antriebsnockennut (39) des Drehbetätigungsteils (35) zum Bewegen eines Spielerteils (13) in der Aufwärts- und Abwärtsrichtung relativ zu der Ebene einer eingelegten Platte in Eingriff stehen,
der Abtastertrageteil (20) auf dem Spielerteil (13) derart gehalten ist, daß er relativ zu der Oberfläche einer eingelegten Platte schrägstellbar ist,
**gekennzeichnet** durch
ein Nockenteil (42), das mittels des Drehbetätigungsteils (35) drehbar ist und an seinem Umfang eine Schrägstellnockennut (43) hat, die mit dem Abtastertrageteil (20) in Eingriff treten kann, und einen Öffnungsteil (43a) hat, der einem in dem Spielerteil (13) vorgesehenen Eingreifteil (27) gegenübersteht, wenn der Spielerteil (13) aufwärts bewegt ist, wobei das Nockenteil betätigbar ist, um den Abtastertrageteil durch Eingreifen desselben in die Schrägstellnockennut (43) schrägzustellen.

2. Optischer Plattenspieler nach Anspruch 1, der ferner einen Neigungssensor (26) umfaßt, der auf dem optischen Abtastkopf (24, 25) vorgesehen ist, und bei dem das Nokkenteil (42) auf der Grundlage eines erfaßten Ausgangssignals des Neigungssensors (26) gedreht wird, so daß der Abtastertragteil (20) für den optischen Abtastkopf schräggestellt werden kann.

3. Optischer Plattenspieler nach Anspruch 1 oder 2, bei dem die Antriebsnockennut (39) des Drehbetätigungsteils (35) aus einem Einlegebereich (39a), welcher der Bewegung des Plattentrageteils (4) entspricht, einem Einspannbereich (39b), der sich an den Einlegebereich anschließt, zum Bewegen der Hebemittel (12 bis 18) in der Aufwärts- und der Abwärtsrichtung und einem Neigungsbereich (39c) besteht, der mit dem Einspannbereich (39b) in Verbindung steht ist, wobei das Nockenteil (42) drehbar ist, um den Abtastertrageteil (20) für den optischen Abtastkopf schrägzustellen, wenn sich die Hebemittel (12 bis 18) in Eingriff mit dem Neigungsbereich (39c) der Antriebsnokkennut (39) befinden.

4. Optischer Plattenspieler nach Anspruch 1, 2 oder 3, bei dem das Plattentragemittel (4) einen Plattenboden (4) enthält, der einen konkaven Teil (4a) enthält, auf dem eine optische Platte abgelegt werden kann, und das Drehbetätigungsteil (35) mit einem Zahnradteil (37) zum Treiben einer Zahnstange (41) des Plattenbodens (4) versehen ist, um den Plattenboden (4) zu bewegen.

## Revendications

1. Lecteur de disque optique, comprenant :
- des moyens porte-disque (4) mobiles entre une position déployée de chargement de disque, à l'extérieur du corps du lecteur, et une position rétractée à l'intérieur du corps du lecteur,
- des moyens d'entraînement (31 à 34) pour déplacer les moyens porte-disque (4) entre les deux positions,
- des moyens de soulèvement (12 à 18) pour déplacer un disque chargé jusqu'à une position de lecture, et
- une partie porte-lecteur (20) qui porte une tête de lecture optique (24, 25), dans lequel :
- les moyens d'entraînement (31 à 41) sont pourvus d'un organe d'actionnement de rotation (35) qui possède une gorge de came d'entraînement (39) destinée à déplacer les moyens porte-disque (4) entre ladite position déployée et ladite position rétractée ;
- les moyens de soulèvement (12 à 18) sont engagés avec ladite gorge de came (39) de l'organe d'actionnement de rotation (35) pour déplacer une partie de lecture (13) dans la direction montante/descendante par rapport au plan d'un disque chargé ;
- la partie porte-lecteur (20) est supportée sur ladite partie de lecteur (13) de manière à pouvoir être mise en biais par rapport à la surface d'un disque chargé, caractérisé par :
- un élément de came (42) capable d'être mis en rotation par ledit organe d'actionnement de rotation (35), et qui présente sur sa périphérie une gorge de came d'inclinaison (43) capable d'être engagée avec ladite partie porte-lecteur (20), et présentant une partie d'ouverture (43a) qui est opposée à un élément d'engagement (27) prévu dans ladite partie de lecture (13) lorsque ladite partie de lecture (13) est déplacée vers le haut, l'élément de came pouvant être actionné pour mettre ladite partie porte-lecteur en biais par engagement de celle-ci avec ladite gorge de came (43) d'inclinaison.

2. Lecteur de disque optique, selon la revendication 1, comprenant en outre un capteur d'inclinaison (26) prévu sur ladite tête de lecture optique (24, 25), et dans lequel ledit élément de came (42) est tourné sur la base d'un signal de sortie détectée par ledit détecteur d'inclinaison (26), de sorte ladite partie porte-lecteur (20) peut être mise en biais.

3. Lecteur de disque optique, selon l'une ou l'autre des revendications 1 et 2 dans lequel ladite gorge de came (39) de l'organe d'actionnement de rotation (35) comprend une zone de chargement (39a) qui correspond au mouvement desdits moyens porte-disque (4), une zone de mandrinage (39b) contiguë à ladite zone de chargement (39a) pour déplacer lesdits moyens de soulèvement (12 à 18) dans la direction montante/descendante, et une zone de basculement (39c) qui communique avec ladite zone de mandrinage (39b), ledit élément de came (42) pouvant être tourné pour mettre ladite partie porte-lecteur (20) en biais lorsque les moyens de soulèvement (12 à 18) sont engagés avec la partie de basculement (39c) de la gorge de came (39).

4. Lecteur de disque optique, selon l'une quelconque des revendications 1, 2 ou 3, dans lequel lesdits moyens porte-disque (4) comprennent un plateau à disque (4) qui présente une partie concave (4a) sur laquelle on peut charger un disque optique, et ledit organe d'actionnement de rotation (35) est pourvu d'une partie dentée (37) pour entraîner une crémaillère (41) dudit plateau à disque (4) afin de déplacer ledit plateau à disque (4).
